# FASCICULE DE BREVET EUROPEEN

(11) **EP 4 256 179 B1**
(45) Date de publication et mention de la délivrance du brevet: **01.01.2025**
(21) Numéro de dépôt: 21839599.4
(22) Date de dépôt: 26.11.2021
(51) Int. Cl.: F01D 9/04, F01D 11/00

(54) **REDRESSEUR DE TURBOMACHINE D'AERONEF**
LEITSCHAUFELANORDNUNG FÜR EIN FLUGZEUGTURBINENTRIEBWERK
GUIDE VANE ASSEMBLY FOR AN AIRCRAFT TURBINE ENGINE

(30) Priorité: 07.12.2020 FR 2012748
(43) Date de publication de la demande: 11.10.2023
(73) Titulaire: SAFRAN AIRCRAFT ENGINES, 75015 Paris (FR)
(72) Inventeur: MERLIN, Rémi, 77550 MOISSY-CRAMAYEL (FR)
(74) Mandataire: Gevers & Orès
(86) Numéro de dépôt international: PCT/FR2021/052110
(87) Numéro de publication internationale: WO 2022/123140

(56) Documents cités:
- EP-A1- 3 540 180
- FR-A1- 3 001 761
- FR-A1- 3 055 145
- FR-A1- 3 082 233

## Description

### Domaine technique de l'invention

L'invention est relative au domaine des redresseurs de turbomachine d'aéronef.

### Arrière-plan technique

L'état de la technique comprend notamment les documents FR-A1-3 082 233, FR-A1-3 055 145, FR-A1-3 001 761 et EP-A1-3 540 180.

Dans les turbomachines d'aéronef, et notamment dans les turboréacteurs à double corps, chaque étage d'un compresseur comprend, classiquement, d'une part, une partie rotorique avec des pales mobiles dont la rotation autour d'un axe de la turbomachine entraîne l'accélération d'un flux dans une veine du compresseur et, d'autre part, une partie statorique, accolée à la partie rotorique, dont le rôle est de redresser le flux issu des pales du rotor. Cette partie statorique, aussi appelée redresseur, est constituée d'une pluralité de secteurs qui mis bout-à-bout forment un redresseur complet de forme annulaire. Dit autrement, un redresseur est sectorisé et comporte une pluralité de secteurs disposés circonférentiellement les uns à côté des autres et qui s'étendent autour d'un même axe.

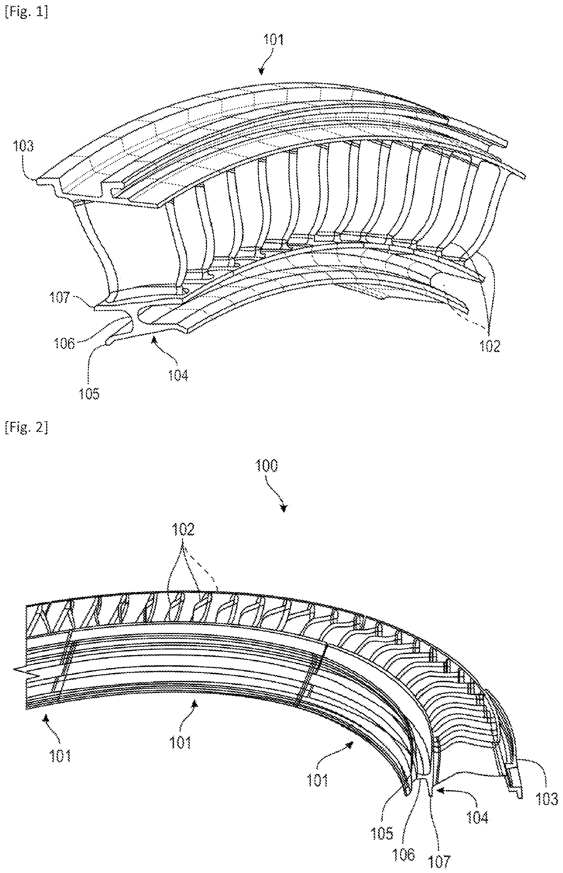

Les figures 1 et 2 illustrent respectivement un exemple de secteur de redresseur et plusieurs secteurs assemblés d'un redresseur conforme à l'état de la technique. En particulier, un seul secteur 101 est représenté à la figure 1 et trois secteurs 101 sont représentés à la figure 2.

Le redresseur 100, partiellement représenté à la figure 2, comporte deux viroles annulaires 104 et 103, respectivement interne et externe, qui s'étendent autour d'un même axe X et qui sont reliées ensemble par des pales 102. De plus, comme il apparaît plus clairement à la figure 1, toutes les pales 102 du secteur 101 sont identiques et tous les tronçons de secteur auxquels sont liés ces pales sont eux aussi identiques.

La répétition de tronçons identiques sur toute l'étendue longitudinale du secteur 101 le rend sensible à des phénomènes de résonnance liés aux vibrations. Plus précisément, dans la mesure où tous les tronçons sont identiques, ils répondent aux mêmes fréquences et comme leurs liaisons sont réalisées via des viroles très rigides, il se produit une accumulation des phénomènes vibratoires et donc une amplification de la réponse aux vibrations du redresseur dans son ensemble.

En outre, l'énergie (des vibrations) se transmet d'autant mieux de pale en pale que les viroles qui lient les pales sont rigides.

En l'espèce, la virole interne 104 présente, selon une section axiale, une forme de I. Plus précisément, elle comporte une paroi cylindrique interne 105 et une paroi cylindrique externe 107 qui sont reliées l'une à l'autre par une âme annulaire 106. L'expérience montre qu'une telle géométrie entraîne des niveaux vibratoires très élevés et une base modale très dense. En particulier, le fait que cette géométrie présente une base modale très dense favorise le cumul de modes et entraîne en conséquence des niveaux vibratoires (i.e. une amplitude des vibrations) élevés.

En résumé, la problématique de la réponse aux vibrations de redresseurs dans une turbomachine d'aéronef est un enjeu majeur. En particulier, dès lors qu'un tel redresseur est destiné à être intégré à un compresseur haute pression d'un corps haute pression, il doit pouvoir supporter des conditions environnementales difficiles (i.e. en terme de pressions, de température et de régime élevé du rotor) qui génèrent un nombre de modes et des niveaux vibratoires élevés.

### Résumé de l'invention

La présente invention propose une solution permettant de diminuer les réponses vibratoires d'un redresseur. En outre, la solution proposée n'affecte pas le design d'un secteur lié à ses propriétés aérodynamiques (i.e. la forme des pales) ou à son intégration dans le redresseur (i.e. les interfaces entre secteurs).

À cet effet, selon un premier aspect, l'invention concerne un redresseur de turbomachine d'aéronef, ce redresseur comportant deux viroles annulaires, respectivement interne et externe, s'étendant autour d'un même axe et reliées ensemble par des pales, ladite virole interne présentant sensiblement, selon une section axiale, une forme de I et comportant deux parois cylindriques, respectivement interne et externe, et reliées l'une à l'autre par une âme annulaire, le redresseur étant sectorisé et comportant une pluralité de secteurs disposés circonférentiellement les uns à côté des autres autour dudit axe, caractérisée en ce que chacun des secteurs comprend une portion d'âme qui comprend au moins une concavité orientée en direction axiale.

Grâce à la modification de la géométrie de la virole interne du redresseur, la réponse de celui-ci aux vibrations est modifiée. En particulier, le déplacement axiale de l'âme de la virole interne sur certaines portions de la virole entraîne une modification de la rigidité de ladite virole qui permet de réduire ses réponses vibratoires.

Le redresseur selon l'invention peut comprendre une ou plusieurs des caractéristiques suivantes, prises isolément les unes des autres ou en combinaison les unes avec les autres :
- chacun des secteurs comprend une portion d'âme qui comprend au moins une concavité orientée vers l'amont par rapport à une direction d'écoulement des gaz à travers le redresseur en fonctionnement.
- chacun des secteurs comprend une portion d'âme qui comprend au moins une concavité orientée vers l'aval par rapport à une direction d'écoulement des gaz à travers le redresseur en fonctionnement.
- chacun des secteurs comprend une portion d'âme qui comprend au moins deux concavités orientées axialement dans une même direction.
- les secteurs de redresseur sont identiques.
- l'âme s'étend en direction axiale sur une dimension qui représente au moins 200% d'une épaisseur axiale de l'âme.
- l'âme a une forme générale de sinusoïde autour dudit axe.
- la portion d'âme de chaque secteur comprend des extrémités circonférentielles qui s'étendent dans un plan perpendiculaire à l'axe, ou qui s'étendent dans des plans inclinés par rapport à cet axe.
- la paroi cylindrique interne porte un revêtement annulaire en matériau abradable. Selon un second aspect, l'invention concerne aussi une turbomachine d'aéronef, comprenant au moins un redresseur selon le premier aspect.

### Brève description des figures

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
[Fig. 1] la figure 1 est une vue en perspective d'un secteur de redresseur selon l'état de l'art ;
[Fig. 2] la figure 2 est une vue en perspective d'un redresseur selon l'état de l'art; [Fig. 3a] la figure 3a est une vue en perspective d'un secteur de redresseur selon un premier mode de réalisation de l'invention ;
[Fig. 3b] la figure 3b est une vue en perspective d'un secteur de redresseur selon un premier mode de réalisation de l'invention ;
[Fig. 4a] la figure 4a est une vue en perspective d'un secteur de redresseur selon un deuxième mode de réalisation de l'invention ;
[Fig. 4b] la figure 4b est une vue en perspective d'un secteur de redresseur selon un deuxième mode de réalisation de l'invention ;
[Fig. 5a] la figure 5a est une représentation schématique de la forme d'une virole interne d'un secteur de redresseur selon un troisième mode de réalisation de l'invention ;
[Fig. 5b] la figure 5b est une représentation schématique de la forme d'une virole interne d'un secteur de redresseur selon un quatrième mode de réalisation de l'invention ;
[Fig. 6a] la figure 6a est une représentation schématique de la forme d'une virole interne d'un secteur de redresseur selon un cinquième mode de réalisation de l'invention ; et,
[Fig. 6b] la figure 6b est une représentation schématique de la forme d'une virole interne d'un secteur de redresseur selon un sixième mode de réalisation de l'invention.

Les éléments ayant les mêmes fonctions dans les différents modes de réalisation ont les mêmes références dans les figures.

### Description détaillée de l'invention

Les figures 1 et 2 ont été décrites dans ce qui précède.

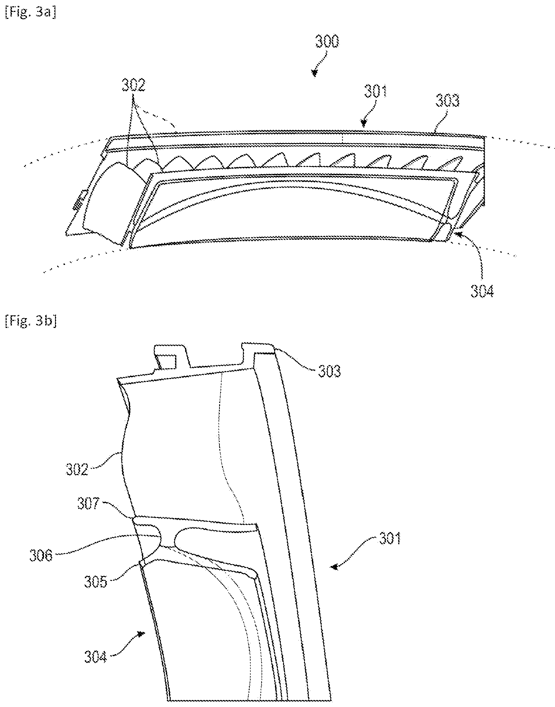

En référence à la figure 3a et à la figure 3b nous allons maintenant décrire un redresseur 300 d'une turbomachine d'aéronef (non-représentée) selon un premier mode de réalisation. Pour des raisons de lisibilité, seul le secteur 301 du redresseur 300 est représenté tandis que les autres secteurs sont symbolisés par les traits pointillés à la figure 3a. Le redresseur 300 comporte donc une pluralité de secteurs 301 qui sont disposés circonférentiellement les uns à côté des autres autour d'un axe X. Le redresseur 300 complet a donc une forme d'anneau.

Les figures 3a et 3b sont deux vues en perspectives d'un secteur de redresseur 301 selon deux points de vues distincts, respectivement depuis le dessous (i.e. depuis la partie interne du secteur) et depuis la tranche (i.e. depuis l'une des extrémités longitudinales du secteur). Dans les deux cas, la partie 305, la plus interne du secteur 301, est montrée en transparence pour faire apparaître plus clairement la forme spécifique d'une partie du secteur décrite plus loin.

Le redresseur 300 comporte deux viroles annulaires 304 et 303, respectivement interne et externe, qui s'étendent autour d'un même axe X et qui sont reliées ensemble par des pales 302. Comme il apparaît plus clairement à la figure 3b, la virole interne présente sensiblement, selon une section axiale, une forme de I. En particulier, elle comporte deux parois cylindriques 305 et 307, respectivement interne et externe, qui sont reliées l'une à l'autre par une âme annulaire 306. L'homme du métier appréciera que l'invention s'applique aussi à une virole dont la paroi cylindrique interne porte un revêtement annulaire en matériau abradable.

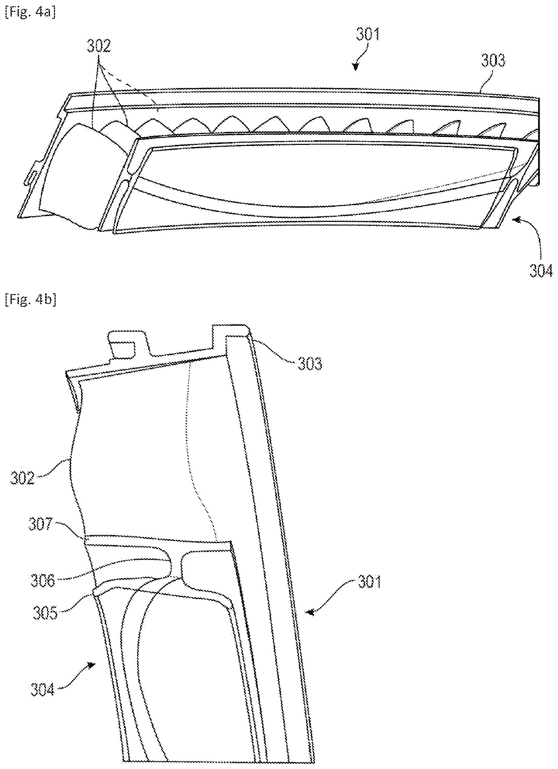

En outre, la virole interne 304 comprend une portion d'âme qui comprend une concavité orientée en direction axiale. Dans l'exemple représenté aux figures 3a et 3b, l'âme 306 du secteur 301 a sensiblement une forme de U. Ainsi, dans cet exemple, la concavité de l'âme est orientée vers l'amont par rapport à une direction d'écoulement des gaz à travers le redresseur en fonctionnement. Dit autrement, les extrémités du U sont orientées vers l'amont lorsque le redresseur est monté dans la turbomachine. Les figures 4a et 4b illustrent un autre mode de réalisation dans lequel l'âme 306 du secteur 301 a sensiblement une forme de U inversé, c'est-à-dire que la concavité de l'âme est orientée vers l'aval par rapport à une direction d'écoulement des gaz à travers le redresseur en fonctionnement.

Dans les différents modes de réalisation de l'invention, les différents secteurs du redresseur peuvent être tous identiques ou différents les uns des autres. En outre, dans un mode de réalisation particulier, les extrémités des secteurs en vis-à-vis dans le redresseur sont identiques. Avantageusement, le fait qu'au moins les extrémités des secteurs d'un redresseur soient identiques permet d'éviter la survenue de phénomènes de recirculation du flux c'est-à-dire le fait qu'un flux puisse circuler au niveau de la virole interne à chaque jonction entre deux secteurs distincts.

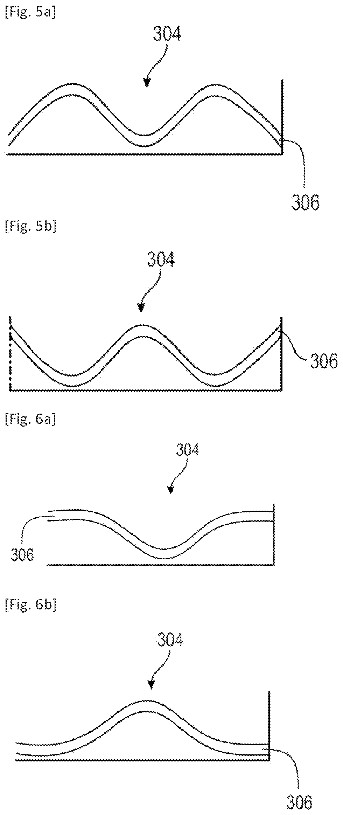

Les figures 5a et 5b illustrent deux modes de réalisation du redresseur dans lesquels chacun des secteurs comprend une portion d'âme qui comprend au moins deux concavités orientées axialement dans une même direction. Par exemple, l'âme 502 a sensiblement la forme de deux U identiques accolés, comme à la figure 5b, ou l'âme 501 a sensiblement la forme de deux U inversés identiques accolés, comme à la figure 5a.

Dans d'autres modes de réalisation, l'âme de la virole interne peut avoir une forme générale de sinusoïde. Dans d'autres modes de réalisation encore, tels que représentés aux figures 6a et 6b, l'âme 601 ou 602 a sensiblement une forme de U dont les extrémités sont prolongées par des portions d'âme s'étendant parallèlement à l'étendue longitudinale de la virole interne.

Avantageusement, la variation de la position axiale de l'âme suivant l'étendue longitudinale d'un secteur de redresseur entraîne une variation locale de la rigidité de la virole interne et, par conséquent, une variation des réponses vibratoires du redresseur. En l'espèce la rigidité de la virole interne est localement diminuée et ce qui entraîne une diminution des réponses vibratoires du secteur.

L'homme du métier saura adapter la forme de l'âme pour obtenir ces effets dans un redresseur déterminé. En particulier, la forme de l'âme pourra être modifiée de manière à diminuer les réponses vibratoires propres à certaines plages de fréquences de vibration déterminées.

En outre, pour obtenir un tel effet, l'âme peut s'étendre selon la direction axiale sur une dimension suffisante pour diminuer sa rigidité, par exemple, selon une dimension qui représente au moins 200% d'une épaisseur axiale de l'âme. Ainsi la modification locale de la position axiale de l'âme produit nécessairement un effet sur les réponses vibratoires du secteur. En outre, dans tous les cas, l'âme s'étend entre les bords axiaux de la virole interne. Dit autrement, l'âme ne dépasse pas du reste de la virole selon la direction axiale.

Dans les différents modes de réalisation du redresseur, selon la géométrie des secteurs, l'âme de la virole interne d'un secteur peut former un angle droit avec la tranche dudit secteur (comme par exemple pour les modes de réalisation des figures 6a et 6b) ou être inclinée par rapport à cette tranche (comme par exemple pour les modes de réalisation des figures 5a et 5b). Dit autrement, la portion d'âme de chaque secteur qui comprend au moins une concavité, comprend des extrémités circonférentielles qui s'étendent dans un plan perpendiculaire à l'axe autour duquel s'étend le redresseur, ou qui s'étendent dans des plans inclinés par rapport à cet axe. Avantageusement, la fabrication d'un redresseur utilisant les géométries de secteur de redresseur selon l'invention peut être obtenue aussi bien par usinage que par fabrication additive.

Enfin, dans tous les modes de réalisation du redresseur, seule la forme de la virole interne des secteurs du redresseur est modifiée. L'impact sur la conception aérodynamique ou l'intégration dudit redresseur est donc nul.

## Revendications

1. Redresseur (300) de turbomachine d'aéronef, ce redresseur comportant deux viroles annulaires (304, 303), respectivement interne et externe, s'étendant autour d'un même axe (X) et reliées ensemble par des pales (302), ladite virole interne présentant sensiblement, selon une section axiale, une forme de I et comportant deux parois cylindriques (305, 307), respectivement interne et externe, et reliées l'une à l'autre par une âme annulaire (306), le redresseur étant sectorisé et comportant une pluralité de secteurs (301) disposés circonférentiellement les uns à côté des autres autour dudit axe (X), **caractérisée en ce que** chacun des secteurs (301) comprend une portion d'âme qui comprend au moins une concavité orientée en direction axiale.

2. Redresseur selon la revendication 1, dans lequel chacun des secteurs comprend une portion d'âme qui comprend au moins une concavité orientée vers l'amont par rapport à une direction d'écoulement des gaz à travers le redresseur en fonctionnement.

3. Redresseur selon la revendication 1, dans lequel chacun des secteurs comprend une portion d'âme qui comprend au moins une concavité orientée vers l'aval par rapport à une direction d'écoulement des gaz à travers le redresseur en fonctionnement.

4. Redresseur selon l'une des revendications précédentes, dans lequel chacun des secteurs comprend une portion d'âme qui comprend au moins deux concavités orientées axialement dans une même direction.

5. Redresseur selon l'une des revendications précédentes, dans lequel les secteurs de redresseur sont identiques.

6. Redresseur selon l'une des revendications précédentes, dans lequel ladite âme s'étend en direction axiale sur une dimension qui représente au moins 200% d'une épaisseur axiale de l'âme.

7. Redresseur selon l'une des revendications précédentes, dans lequel l'âme a une forme générale de sinusoïde autour dudit axe.

8. Redresseur selon l'une des revendications précédentes, dans lequel la portion d'âme de chaque secteur comprend des extrémités circonférentielles qui s'étendent dans un plan perpendiculaire à l'axe, ou qui s'étendent dans des plans inclinés par rapport à cet axe.

9. Redresseur selon l'une des revendications précédentes, dans lequel ladite paroi cylindrique interne porte un revêtement annulaire en matériau abradable.

10. Turbomachine d'aéronef, comprenant au moins un redresseur selon l'une des revendications précédentes.

## Patentansprüche

1. Leitschaufelanordnung (300) für ein Flugzeugturbinentriebwerk, wobei diese Leitschaufelanordnung zwei ringförmige Halterungen (304, 303), eine innere und eine äußere, umfasst, die sich um eine selbe Achse (X) erstrecken und durch Schaufeln (302) miteinander verbunden sind, wobei die innere Halterung in einem axialen Querschnitt im Wesentlichen I-förmig ist und zwei zylindrische Wände (305, 307), eine innere und eine äußere, umfasst, die durch einen ringförmigen Steg (306) miteinander verbunden sind, wobei die Leitschaufelanordnung unterteilt ist und eine Vielzahl von Teilabschnitten (301) umfasst, die umlaufend nebeneinander um die Achse (X) angeordnet sind, **dadurch gekennzeichnet, dass** jeder der Teilabschnitte (301) einen Stegabschnitt umfasst, der mindestens einen in axialer Richtung ausgerichteten Hohlraum umfasst.

2. Leitschaufelanordnung nach Anspruch 1, wobei jeder der Teilabschnitte einen Stegabschnitt umfasst, der mindestens einen im Betrieb in Bezug auf eine Abströmungsrichtung der Gase durch die Leitschaufelanordnung hindurch stromaufwärts ausgerichteten Hohlraum umfasst.

3. Leitschaufelanordnung nach Anspruch 1, wobei jeder der Teilabschnitte einen Stegabschnitt umfasst, der mindestens einen im Betrieb in Bezug auf eine Abströmungsrichtung der Gase durch die Leitschaufelanordnung hindurch stromabwärts ausgerichteten Hohlraum umfasst.

4. Leitschaufelanordnung nach einem der vorstehenden Ansprüche, wobei jeder der Teilabschnitte einen Stegabschnitt umfasst, der mindestens zwei axial in eine selbe Richtung ausgerichtete Hohlräume umfasst.

5. Leitschaufelanordnung nach einem der vorstehenden Ansprüche, wobei die Teilabschnitte der Leitschaufelanordnung identisch sind.

6. Leitschaufelanordnung nach einem der vorstehenden Ansprüche, wobei sich der Steg in axialer Richtung über eine Größe erstreckt, die mindestens 200% einer axialen Dicke des Stegs darstellt.

7. Leitschaufelanordnung nach einem der vorstehenden Ansprüche, wobei der Steg eine allgemeine Form einer Sinuskurve um die Achse aufweist.

8. Leitschaufelanordnung nach einem der vorstehenden Ansprüche, wobei der Stegabschnitt jedes Teilabschnitts umlaufende Enden umfasst, die sich in einer Ebene senkrecht zur Achse erstrecken oder die sich in Ebenen erstrecken, die in Bezug auf diese Achse geneigt sind.

9. Leitschaufelanordnung nach einem der vorstehenden Ansprüche, wobei die innere zylindrische Wand eine ringförmige Beschichtung aus abreibbarem Material trägt.

10. Flugzeugturbinentriebwerk, das mindestens eine Leitschaufelanordnung nach einem der vorstehenden Ansprüche umfasst.

## Claims

1. A guide vane assembly (300) for an aircraft turbine engine, this guide vane assembly comprising two annular shells (304, 303), an internal and an external respectively, extending around a common axis (X) and connected together by blades (302), said internal shell having substantially, in axial cross-section, an I shape and comprising two cylindrical walls (305, 307), respectively internal and external, and connected to each other by an annular core (306), the guide vane assembly being sectorised and comprising a plurality of sectors (301) arranged circumferentially next to each other about said axis (X), **characterised in that** each of the sectors (301) comprises a core segment which comprises at least one concavity oriented in the axial direction.

2. The guide vane assembly of claim 1, wherein each of the sectors comprises a core segment which comprises at least one concavity oriented towards upstream with respect to a flowing direction of the gases through the guide vane assembly in operation.

3. The guide vane assembly of claim 1, wherein each of the sectors comprises a core segment which comprises at least one concavity oriented towards downstream with respect to a flowing direction of the gases through the guide vane assembly in operation.

4. The guide vane assembly according to any of the preceding claims, wherein each of the sectors comprises a core segment which comprises at least two concavities axially oriented in a same direction.

5. The guide vane assembly according to any of the preceding claims, wherein the guide vane assembly sectors are identical.

6. The guide vane assembly according to any of the preceding claims, wherein said core extends in an axial direction over a dimension that is at least 200% of an axial thickness of the core.

7. The guide vane assembly according to any of the preceding claims, wherein the core has a general sinusoidal shape about said axis.

8. The guide vane assembly according to any of the preceding claims, wherein the core segment of each sector comprises circumferential ends which extend in a plane perpendicular to the axis, or which extend in planes inclined with respect to that axis.

9. The guide vane assembly according to any of the preceding claims, wherein said internal cylindrical wall carries an annular coating of abradable material.

10. An aircraft turbine engine, comprising at least one guide vane assembly according to any of the preceding claims.
